# EUROPÄISCHE PATENTSCHRIFT

(11) **EP 3 802 208 B1**
(45) Veröffentlichungstag und Bekanntmachung des Hinweises auf die Patenterteilung: **22.11.2023**
(21) Anmeldenummer: 19729262.6
(22) Anmeldetag: 06.06.2019
(51) Int. Cl.: B60N 2/865, B60N 2/818, B60N 2/821, B60N 2/829, B60N 2/894

(54) **HÖHENVERSTELLBARE UND LÄNGSVERSTELLBARE KOPFSTÜTZE**
HIGHT ADJUSTABLE AND LONGITUDINALLY ADJUSTABLE HEADREST
APPUIE TÊTE AJUSTABLE EN HAUTEUR ET ADJUSTABLE LONGITUDINALEMENT

(30) Priorität: 11.06.2018 DE 102018209291; 11.06.2018 DE 102018209292
(43) Veröffentlichungstag der Anmeldung: 14.04.2021
(73) Patentinhaber: Adient US LLC, Plymouth, MI 48170 (US)
(72) Erfinder: MORILHAT, Philippe, 67230 Kertzfeld (FR); MANDUZIO, Felix, 67400 Illkirch-Graffenstaden (FR); MORINIERE, Christophe, 67810 Holtzheim (FR)
(74) Vertreter: Liedhegener, Ralf
(86) Internationale Anmeldenummer: PCT/EP2019/064752
(87) Internationale Veröffentlichungsnummer: WO 2019/238516

(56) Entgegenhaltungen:
- WO-A1-2010/123503
- WO-A1-2011/032702
- CN-B- 102 717 735
- JP-A- S5 962 016
- JP-U- S61 129 554
- US-A1- 2011 109 144

## Beschreibung

Die Erfindung betrifft eine höhenverstellbare Kopfstütze.

Im Stand der Technik sind verschiedene höhenverstellbare Kopfstützen bekannt.

Aus der JP S59 62016 A und der US 2011/109144 A1 ist jeweils eine höhenverstellbare Kopfstütze mit einem Grundtragelement und einem darin angeordneten, in einer X-Richtung längsverschieblich führbaren Tragelement bekannt. Zur Ausbildung einer Führung umfasst das Grundtragelement eine Anzahl von Öffnungen und das Tragelement eine Anzahl von Führungsteilen, wobei eine Form der Anzahl von Öffnungen mit einer Form der Anzahl von Führungsteilen korrespondiert.

Aus der CN 102 717 735 B ist eine nicht höhenverstellbare Kopfstütze mit einem Grundtragelement und einem darin angeordneten, in einer X-Richtung manuell längsverschieblich führbaren Tragelement bekannt. Zur Ausbildung einer Führung umfasst das Grundtragelement genau eine Öffnung und das Tragelement genau ein Führungsteil, wobei eine Form der Öffnung mit einer Form des Führungsteils korrespondiert.

Die JP S61 129554 U offenbart eine höhenverstellbare Kopfstütze mit einem Kopfstützenkörper, der mittels eines Tragbügels an einer Rückenlehne befestigbar ist. Der Kopfstützenkörper ist mittels eines Motors elektromotorisch längsverschieblich relativ zum Tragbügel. Dazu greift ein Abtriebsritzel des Motors in eine vertikal verlaufende Verzahnung in dem Tragbügel.

Die WO 2010/123503 A1 offenbart eine Sitzanordnung mit einer Rückenlehne und einer Kopfstützenanordnung. Die Kopfstützenanordnung umfasst eine Kopfstütze zum Stützen eines Kopfes eines Sitzinsassen, einen Stützpfosten und eine Antriebsbaugruppe. Der Stützpfosten erstreckt sich zwischen der Rückenlehne und der Kopfstütze und verfügt über einen Eingriffsbereich. Die Antriebsanordnung weist ein drehbares Element auf, das in den Eingriffsbereich eingreift. Die Antriebsbaugruppe bewegt die Kopfstütze weg von der Rückenlehne, wenn das drehbare Element in eine erste Richtung gedreht wird und bewegt die Kopfstütze in Richtung der Rückenlehne, wenn das drehbare Element in eine zweite Richtung gedreht wird, die der ersten Richtung entgegengesetzt ist.

Aus der WO 2011/032702 A1 ist eine höhenverstellbare Kopfstütze bekannt, aufweisend ein Grundtragelement und ein darin angeordnetes, in einer Längsrichtung längsverschieblich führbares Tragelement, wobei zur Ausbildung einer Führung das Grundtragelement Öffnungen umfasst und das Tragelement Führungsteile umfasst. Eine Form der Öffnungen korrespondiert mit einer Form der Führungsteile, wobei das Tragelement gegenüber dem Grundtragelement mittels eines Motors elektromotorisch längsverschieblich ist, wobei an einem Führungsteil ein Zahnstangenelement angeordnet ist, das mit einem Zahnrad in Wirkzusammenhang steht, wobei das Zahnrad auf einer ersten Welle angeordnet ist, die mittels des ersten Motors antreibbar ist.

Aufgabe der vorliegenden Erfindung ist es, eine verbesserte höhenverstellbare Kopfstütze anzugeben.

Die Aufgabe wird erfindungsgemäß mit einer höhenverstellbaren Kopfstütze gelöst, die die in Anspruch 1 angegebenen Merkmale umfasst.

Die mit der Erfindung erzielten Vorteile bestehen darin, dass ein Polsterteil der höhenverstellbaren Kopfstütze besonders einfach auch in Fahrzeuglängsrichtung verstellbar ist und dass die Kopfstütze eine besonders kompakte Bauform aufweist. Mittels der erfindungsgemäßen Kopfstütze sind ein Komfort bei der Nutzung derselben und eine Sicherheit für einen Fahrzeuginsassen verbessert.

Bei der erfindungsgemäßen Kopfstütze ist das Tragelement gegenüber dem Grundtragelement mittels eines ersten Motors elektromotorisch längsverschieblich. Dadurch sind die vorgenannten Vorteile auf eine besonders einfache und komfortable Weise erzielbar.

Bei der erfindungsgemäßen Kopfstütze ist vorgesehen, dass das Grundtragelement zur Ausbildung der Führung eine Anzahl von Öffnungen, insbesondere zwei Öffnungen, umfasst und das Tragelement eine Anzahl von Führungsteilen, insbesondere zwei Führungsteile, umfasst. Dadurch ist das Tragelement besonders gut im Grundtragelement in Längsrichtung verschiebbar.

Bei der erfindungsgemäßen Kopfstütze ist vorgesehen, dass an einem Führungsteil ein erstes Zahnstangenelement angeordnet ist, das mit einem ersten Zahnrad in Wirkzusammenhang steht, wobei das Zahnrad auf einer ersten Welle angeordnet ist, die mittels des ersten Motors antreibbar ist. Die elektromotorische Längsverstellung ist dadurch auf besonders einfache Weise und besonders bevorzugt selbsthemmend ermöglicht.

Dabei ist an zwei Führungsteilen jeweils ein erstes Zahnstangenelement angeordnet, wobei an zwei äußeren Enden der ersten Welle jeweils ein Zahnrad aufgesteckt, also fromschlüssig angeordnet ist. Dabei steht jedes der beiden Zahnräder in Wirkzusammenhang mit einem der ersten Zahnstangenelemente.

Die Erfindung sieht eine elektromotorische Höhenverstellbarkeit vor. Dadurch ist die Kopfstütze besonders hochwertig und komfortabel. Dabei sind ein zweiter Motor zur elektrischen Höhenverstellung und eine mittels des zweiten Motors antreibbare zweite Welle, an deren äußeren Enden jeweils ein zweites Zahnrad aufgesteckt, also formschlüssig angeordnet ist, vorgesehen. Dabei ist jedes der beiden zweiten Zahnräder in Wirkzusammenhang mit Zahnstangen bringbar oder gebracht, welche an Stangen angeordnet sind, an welchen die Kopfstütze befestigbar oder befestigt ist. Dadurch ist die Kopfstütze auf besonders einfache und sichere Weise höhenverstellbar.

Eine nicht erfindungsgemäße Kopfstütze sieht vor, dass das Tragelement gegenüber dem Grundtragelement manuell längsverschieblich ist. Dadurch sind die vorgenannten Vorteile auf eine baulich besonders einfache und damit kostengünstige Weise erzielbar.

Bei dieser nicht erfindungsgemäßen Kopfstütze ist bevorzugt vorgesehen, dass das Grundtragelement zur Ausbildung der Führung genau eine Öffnung umfasst und das Tragelement genau ein Führungsteil umfasst, wobei die Öffnung eine Anzahl von Erhebungen umfasst, die mit einer Anzahl von Ausnehmungen im Führungsteil korrespondiert. Dadurch ist das Tragelement auf besonders einfache Weise und mit besonders hoher Sicherheit gegen ein ungewolltes Verkanten im Grundtragelement längsverschieblich.

Bei der nicht erfindungsgemäßen Kopfstütze ist ein Verriegelungselement zum Verriegeln des Tragelements gegenüber dem Grundtragelement vorgesehen, wobei das Verriegelungselement mittels einer Arretierungsfeder in eine Arretierungsposition bringbar ist. Zudem ist dabei ein manuell bedienbares Entriegelungselement vorgesehen, mit welchem das Verriegelungselement eine Federkraft der Arretierungsfeder überwindend aus der Arretierungsposition in eine Nichtarretierungsposition bewegbar ist. Dadurch sind ein mechanisch sehr einfaches Arretieren des Tragelements in einer Vielzahl verschiedener Positionen der Längsverschiebung sowie ein mechanisch sehr einfaches Lösen dieser Arretierung zur Vornahme einer Änderung der Längsverstellung ermöglicht. Beim manuellen Betätigen des Entriegelungselements wird also eine mechanische Längsverstellbarkeit ermöglicht und bei einem Loslassen des Entriegelungselements wird das Tragelement automatisch durch Federkraft gegenüber dem Grundtragelement verriegelt, also in Längsrichtung fixiert.

Ein Ausführungsbeispiel der Erfindung wird anhand von Zeichnung 2 näher erläutert. Dabei zeigen:
- Figur 1: eine perspektivische Explosionsdarstellung einer nicht erfindungsgemäßen höhenverstellbaren Kopfstütze,
- Figur 2: eine perspektivische Explosionsdarstellung einer erfindungsgemäßen höhenverstellbaren Kopfstütze,
- Figur 3: eine schematische Detailansicht der Kopfstütze aus Figur 1,
- Figur 4: eine schematische Schnittdarstellung der Kopfstütze aus Figur 1,
- Figur 5: eine weitere schematische Schnittdarstellung der Kopfstütze aus Figur 1,
- Figur 6: eine weitere schematische Schnittdarstellung der Kopfstütze aus Figur 1, und
- Figur 7: eine weitere schematische Schnittdarstellung der Kopfstütze aus Figur 1.

Einander entsprechende Teile sind in allen Figuren mit den gleichen Bezugszeichen versehen.

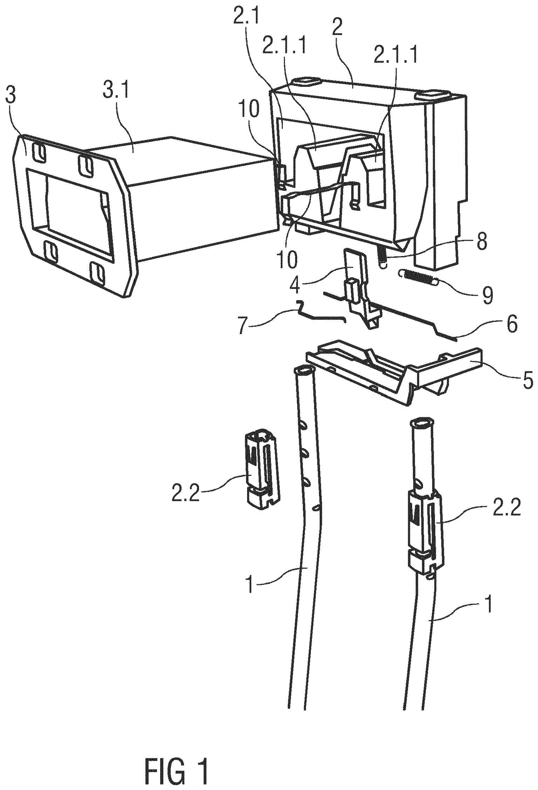

**Figur 1** zeigt eine perspektivische Explosionsdarstellung einer nicht erfindungsgemäßen höhenverstellbaren Kopfstütze. Diese Figur zeigt zwei zu einem Fahrzeugsitz gehörende Stangen 1, die der Aufnahme der höhenverstellbaren, also in Z-Richtung verstellbaren, Kopfstütze dienen. Diese Kopfstütze umfasst ein bevorzugt aus Kunststoff gebildetes Grundtragelement 2 mit einer in Fahrzeuglängsrichtung, also in X-Richtung angeordneten, bevorzugt durchgehenden Öffnung 2.1. Das Grundtragelement 2 umfasst zwei separate Hülsen 2.2, wobei jeweils eine Hülse 2.2 einer Stange 1 zugeordnet ist, mit denen das Grundtragelement 2 auf den Stangen 1 in Z-Richtung verstellbar, also höhenverstellbar, ist, indem die Hülsen 2.2 zumindest in einem nichtarretierten Zustand auf den Stangen 1 verschiebbar sind. In der Öffnung 2.1 des Grundtragelements 2 sind zwei optionale Erhebungen 2.1.1 ausgebildet, die der Führung eines in die Öffnung 2.1 eingesteckten längsverschieblichen, also in X-Richtung verschieblichen, Tragelements 3 dienen. Dazu weist das Tragelement 3 in einem Führungsteil 3.1 zwei unterseitige Ausnehmungen auf, die in Form und Lage mit den Erhebungen 2.1.1 korrespondieren.

Die Kopfstütze umfasst zudem ein zentrales Verriegelungselement 4, mit dem das Tragelement 3 gegenüber dem Grundtragelement 2 und/oder das Grundtragelement 2 gegenüber den Stangen 1 verriegelbar, also fixierbar sind/ist. Mittels eines manuell zu bedienenden Entriegelungselements 5, welches auch als lockshift bezeichnet wird und das mit dem Verriegelungselement 4 in Wirkzusammenhang steht, ist das Tragelement 3 gegenüber dem Grundtragelement 2 und/oder das Grundtragelement 2 gegenüber den Stangen 1 entriegelbar. Eine Arretierungsfeder 6 stellt dazu, also zum Verriegeln und zum Entriegeln, einen Wirkzusammenhang zwischen dem Verriegelungselement 4 und den Hülsen 2.1 her. Eine optionale Unterstützungsfeder 7 dient der Unterstützung einer Bewegung, bevorzugt einer Unterstützung einer nach vorn gerichteten Verschiebung des entriegelten Tragelements 3 gegenüber dem Grundtragelement 2. Zudem sind eine optionale Feder 8 und/oder eine optionale Zugfeder 9 vorgesehen. Die Feder 8 und/oder die Zugfeder 9 dienen/dient bevorzugt einer Rückstellung des Entriegelungselements 5 in seine Grundposition für einen verriegelten Zustand. Beim manuellen Betätigen des Entriegelungselements 5 muss also einer Federkraft der Feder 8 und/oder der Zugfeder 9 entgegengewirkt werden.

Die Kopfstütze umfasst zudem eine Anzahl von Tragelementfedern 10, bevorzugt zwei oder vier Tragelementfedern 10.

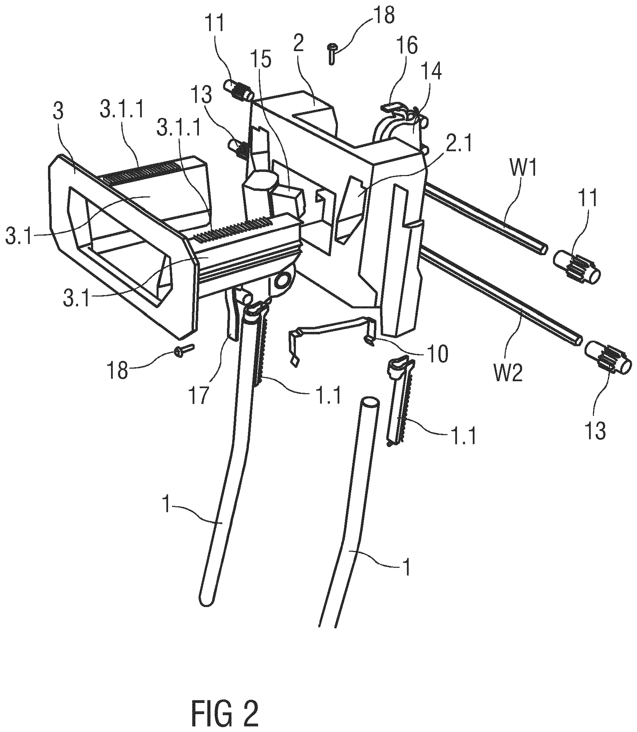

**Figur 2** zeigt eine perspektivische Explosionsdarstellung einer erfindungsgemäßen höhenverstellbaren Kopfstütze. Diese Figur zeigt ebenfalls zwei zu dem nicht vollständig gezeigten Fahrzeugsitz gehörende Stangen 1, die der Aufnahme der höhenverstellbaren, also in Z-Richtung verstellbaren, Kopfstütze dienen. Diese Kopfstütze umfasst das bevorzugt aus Kunststoff gebildete Grundtragelement 2 mit zwei in Fahrzeuglängsrichtung, also in X-Richtung, durchgehenden Öffnungen 2.1.

Das Grundtragelement 2 ist auf den Stangen 1 in Z-Richtung motorisch verstellbar, also motorisch höhenverstellbar.

Die beiden Öffnungen 2.1 des Grundtragelements 2 bilden eine Führung des in die Öffnungen 2.1 eingesteckten längsverschieblichen, also in X-Richtung verschieblichen, Tragelements 3. Dazu korrespondieren zwei Führungsteile 3.1 des Tragelements 3 in ihrer Form mit den beiden Öffnungen 2.1. Jedes Führungsteil 3.1 weist oberseitige erste Zahnstangenelemente 3.1.1 auf, die der Längsverschieblichkeit dienen.

An jedem oberen Ende der Stangen 1 ist jeweils eine Zahnstange 1.1 angeordnet und befestigt, die der Höhenverschieblichkeit dient.

Die Kopfstütze umfasst außerdem Tragelementfedern 10.

Die Kopfstütze umfasst zudem eine erste Welle W1, die bevorzugt als Sechskant ausgebildet ist und die elektromotorisch antreibbar ist. An den äußeren Enden der ersten Welle W1 sind erste Zahnräder 11 aufgesteckt, also formschlüssig angeordnet. Die ersten Zahnräder 11 stehen in Wirkeinheit mit den ersten Zahnstangenelementen 3.1.1, sodass durch Drehung der ersten Welle W1 die Längsverschieblichkeit des Tragelements 3 bewirkbar ist. Bevorzugt ist dieser Antrieb selbsthemmend.

Die Kopfstütze umfasst zudem eine zweite Welle W2, die bevorzugt als Sechskant ausgebildet ist und die elektromotorisch antreibbar ist. An den äußeren Enden der zweiten Welle W2 sind zweite Zahnräder 13 aufgesteckt, also formschlüssig angeordnet. Die zweiten Zahnräder 13 stehen in Wirkeinheit mit den Zahnstangen 1.1, sodass durch Drehung der zweiten Welle W2 die Höhenverstellbarkeit des Tragelements 3 bewirkbar ist. Bevorzugt ist dieser Antrieb selbsthemmend.

Ein erster Motor 14 der Kopfstütze dient dem Antrieb der ersten Welle W1 und damit der Längsverschieblichkeit des Tragelements 3. Ein zweiter Motor 15 der Kopfstütze dient dem Antrieb der zweiten Welle W2 und damit der Höhenverschieblichkeit der Kopfstütze. Der erste Motor 14 ist mittels einer ersten Motorhalterung 16 bevorzugt am Grundtragelement 2 befestigt, der zweite Motor 15 ist mittels einer zweiten Motorhalterung 17 ebenfalls bevorzugt am Grundtragelement 2 befestigt.

Die Kopfstütze umfasst zudem Schrauben 18, mit denen die Motoren 14, 15 am Grundtragelement 2 befestigt sind.

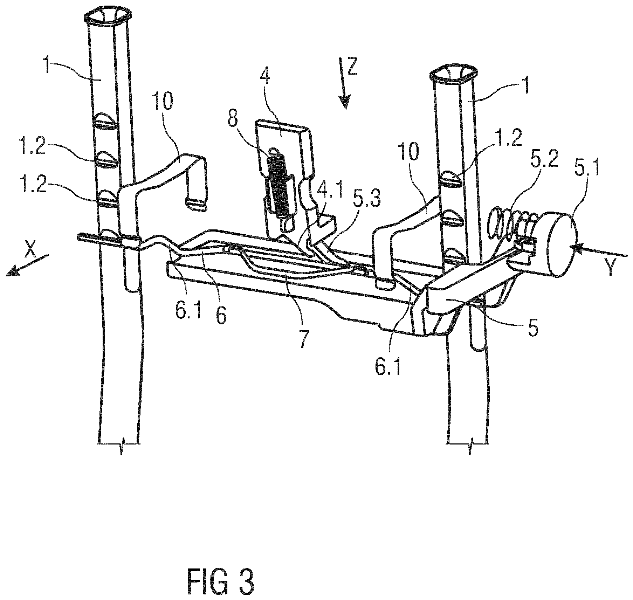

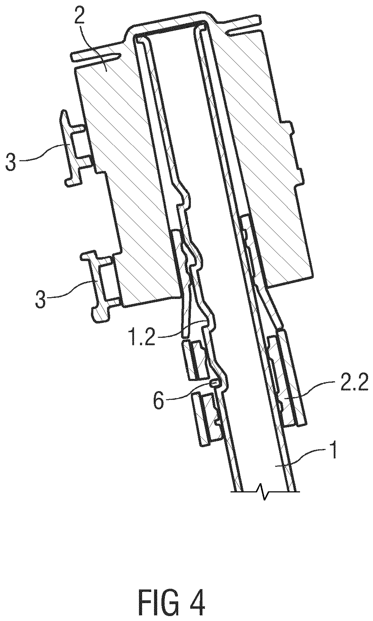

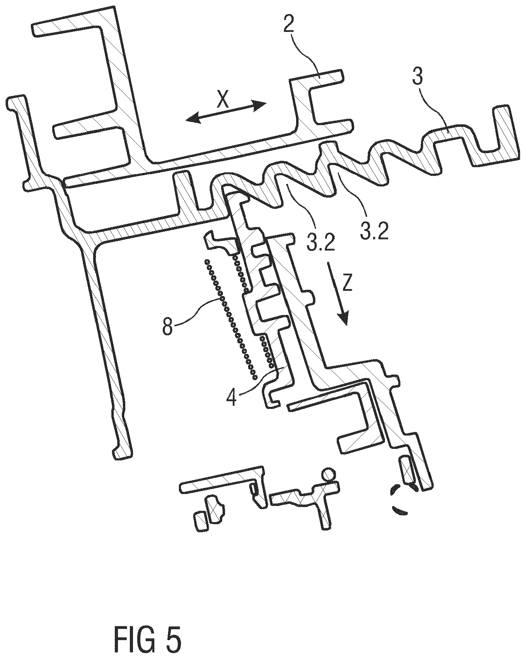

**Figur 3** zeigt eine schematische Detailansicht der Kopfstütze aus Figur 1. **Figuren 4****,** **5****,** **6****, und** **7** sind schematische Schnittdarstellungen der Kopfstütze aus Figur 1. Am Entriegelungselement 5 kann ein Betätigungsknopf 5.1 angeordnet sein um das Entriegelungselement 5 in Y-Richtung, das heißt in Fahrzeugquerrichtung, zu bewegen. Optional kann eine Rückstellfeder 5.2 zum Zurückstellen des Betätigungsknopfes 5.1 und/oder des Entriegelungselements 5 entgegen der Betätigungsrichtung vorgesehen sein. Wenn das Entriegelungselement 5, mit oder ohne Betätigungsknopf, in Y-Richtung auf das Grundtrageelement 2 zu bewegt wird so bewegen sich gleichzeitig die daran befestigten Komponenten Verriegelungselement 4 und Arretierungsfeder 6. Das Verriegelungselement 4 weist eine Rampe 4.1 auf, die mit einer Rampe 5.3 am Entriegelungselement 5 so im Eingriff steht, dass das Verriegelungselement 4 in Z-Richtung nach unten verschoben wird wenn das Entriegelungselement 5 in Y-Richtung auf das Grundtrageelement 2 zu verschoben wird. Alternativ kann auch nur eine der Rampen 4.1, 5.3 an einem der Elemente Verriegelungselement 4 und Entriegelungselement 5 vorgesehen sein und mit einer Oberfläche am jeweils anderen der Elemente Verriegelungselement 4 und Entriegelungselement 5 im Eingriff stehen.

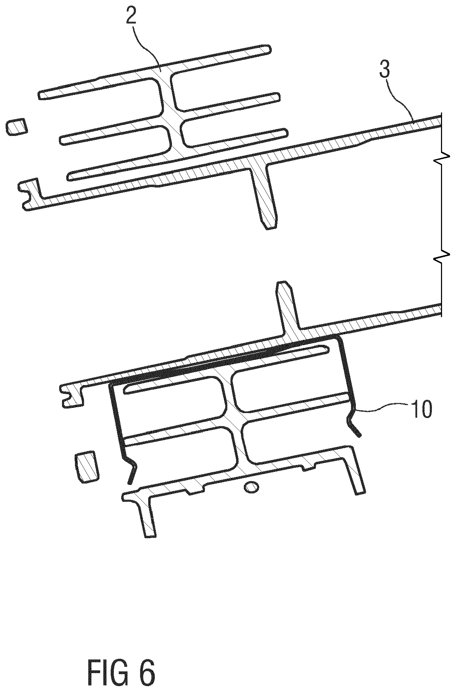

Durch die Bewegung des Verriegelungselement 4 in Z-Richtung nach unten wird das längsverschiebliche Tragelement 3 entriegelt, so dass es in X-Richtung bewegt werden kann. Figur 6 zeigt, dass das Verriegelungselement 4 vor der Betätigung des Entriegelungselements 5 in eine von mehreren in X-Richtung nacheinander angeordneten Rastnuten 3.2 im längsverschieblichen Tragelement 3 eingreift, so dass das längsverschiebliche Tragelement 3 in X-Richtung arretiert ist. Die Feder 8 hält das Verriegelungselement 4 in dieser Position. Zumindest einige der Rastnuten 3.2 können einseitig, beispielsweise in X-Richtung nach hinten, schräg ausgebildet sein, so dass das längsverschiebliche Tragelement 3 in X-Richtung nach vorn auch ohne Betätigung des Entriegelungselements 5 bewegt werden kann. Bei einer solchen Bewegung wird das Verriegelungselement 4 durch die Schräge jeweils aus der Rastnut 3.2 verdrängt und rastet durch die Kraft der Feder 8 in die darauffolgende Rastnut 3.2 ein. Bei einer Betätigung des Entriegelungselements 5 wird das Verriegelungselement 4 in Z-Richtung nach unten aus dem Eingriff mit den Rastnuten 3.2 bewegt so dass das längsverschiebliche Tragelement 3 in X-Richtung frei bewegt werden kann.

Die Arretierungsfeder 6 ist ohne Betätigung des Entriegelungselements 5 in einer von mehreren aufeinanderfolgenden Rastvertiefungen 1.2 an jeder der Stangen 1 eingerastet. Dies ist in Figur 4 dargestellt. Zumindest einige der Rastvertiefungen 1.2 können einseitig, beispielsweise in Z-Richtung nach oben, schräg ausgebildet sein, so dass das Grundtragelement 2 in Z-Richtung nach oben auch ohne Betätigung des Entriegelungselements 5 bewegt werden kann. Bei einer solchen Bewegung wird die Arretierungsfeder 6 durch die Schräge jeweils aus der Rastvertiefung 1.2 verdrängt und rastet durch die eigene Elastizität in die darauffolgende Rastvertiefung 1.2 ein. Die Arretierungsfeder 6 weist ein oder mehrere schräge Abschnitte 6.1 auf, die mit dem Entriegelungselement 5 so im Eingriff stehen, dass bei Betätigung des Entriegelungselements 5 in Y-Richtung auf das Grundtrageelement 2 zu die Arretierungsfeder 6 in X-Richtung, beispielsweise nach vorn, von den Stangen 1 weg und insbesondere aus dem Eingriff mit den Rastvertiefungen 1.2 heraus bewegt wird, so dass das Grundtrageelement 3 in Z-Richtung frei bewegt werden kann.

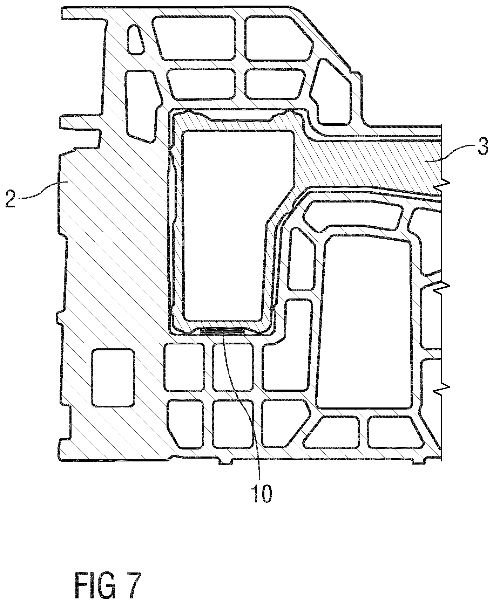

Die Tragelementfedern 10 sind an einem der Elemente Grundtragelement 2 und längsverschiebliches Tragelement 3 befestigt und dienen als Abstandshalter zum dazu geführten jeweils anderen der Elemente Grundtragelement 2 und längsverschiebliches Tragelement 3. Auf diese Weise wird freies Spiel zwischen dem Grundtragelement 2 und dem längsverschieblichen Tragelement 3 reduziert und entsprechende Geräusche, insbesondere Klappern, vermindert. Die Figuren 6 und 7 zeigen beispielhaft eine Anordnung der Tragelementfedern 10 am Grundtragelement 2. Die Tragelementfedern 10 dienen in der Ausführungsform nach Figur 2 dem gleichen Zweck.

### Bezugszeichenliste

- 1: Stangen
- 1.1: Zahnstangen
- 1.2: Rastvertiefung
- 2: Grundtragelement
- 2.1: Öffnung
- 2.1.1: Erhebung
- 2.2: Hülse
- 3: längsverschiebliches Tragelement
- 3.1: Führungsteil
- 3.1.1: erstes Zahnstangenelement
- 3.2: Rastnut
- 4: Verriegelungselement
- 4.1: Rampe
- 5: Entriegelungselement
- 5.1: Betätigungsknopf
- 5.2: Rückstellfeder
- 5.3: Rampe
- 6: Arretierungsfeder
- 6.1: schräger Abschnitt
- 7: Unterstützungsfeder
- 8: Feder
- 9: Zugfeder
- 10: Tragelementfeder
- 11: erste Zahnräder
- 13: zweite Zahnräder
- 14: erster Motor
- 15: zweiter Motor
- 16: erste Motorhalterung
- 17: zweite Motorhalterung
- 18: Schraube

- W1: erste Welle
- W2: zweite Welle

## Patentansprüche

1. Höhenverstellbare Kopfstütze, aufweisend ein Grundtragelement (2) und ein darin angeordnetes, in einer X-Richtung längsverschieblich führbares Tragelement (3), wobei zur Ausbildung einer Führung das Grundtragelement (2) eine Anzahl von Öffnungen (2.1) umfasst und das Tragelement (3) eine Anzahl von Führungsteilen (3.1) umfasst, wobei eine Form der Anzahl von Öffnungen (2.1) mit einer Form der Anzahl von Führungsteilen (3.1) korrespondiert, wobei das Tragelement (3) gegenüber dem Grundtragelement (2) mittels eines ersten Motors (14) elektromotorisch längsverschieblich ist, wobei an einem Führungsteil (3.1) ein erstes Zahnstangenelement (3.1.1) angeordnet ist, das mit einem ersten Zahnrad (11) in Wirkzusammenhang steht, wobei das Zahnrad (11) auf einer ersten Welle (W1) angeordnet ist, die mittels des ersten Motors (14) antreibbar ist,
**dadurch gekennzeichnet, dass**
an zwei Führungsteilen (3.1) jeweils ein erstes Zahnstangenelement (3.1.1) angeordnet ist und wobei an zwei äußeren Enden der ersten Welle (W1) jeweils ein erstes Zahnrad (11) aufgesteckt, also formschlüssig angeordnet ist, wobei jedes der beiden ersten Zahnräder (11) in Wirkzusammenhang mit einem der ersten Zahnstangenelemente (3.1.1) steht,
und mit einer elektromotorischen Höhenverstellbarkeit, aufweisend einen zweiten Motor (15) zur elektrischen Höhenverstellung und eine mittels des zweiten Motors (15) antreibbare zweite Welle (W2),
wobei an zwei äußeren Enden der zweiten Welle (W2) jeweils ein zweites Zahnrad (13) aufgesteckt, also formschlüssig angeordnet ist, wobei jedes der beiden zweiten Zahnräder (13) in Wirkzusammenhang mit Zahnstangen (1.1) bringbar oder gebracht sind, welche an Stangen (1) angeordnet sind, an welchen die Kopfstütze befestigbar oder befestigt ist.

## Claims

1. Height-adjustable headrest, having a basic supporting element (2) and a supporting element (3), which is arranged in the latter and is guidable in a longitudinally displaceable manner in an X direction, wherein, in order to form a guide, the basic supporting element (2) comprises a number of openings (2.1) and the supporting element (3) comprises a number of guide parts (3.1), wherein a shape of the number of openings (2.1) corresponds to a shape of the number of guide parts (3.1), wherein the supporting element (3) is electromotively longitudinally displaceable in relation to the basic supporting element (2) by a first motor (14), wherein a first rack element (3.1.1) is arranged on a guide part (3.1), said rack element interacting with a first pinion (11), wherein the pinion (11) is arranged on a first shaft (W1) which can be driven by the first motor (14),
**characterized in that**
a first rack element (3.1.1) is in each case arranged on two guide parts (3.1), and wherein a first pinion (11) is in each case attached to two outer ends of the first shaft (W1), i.e. arranged in a form-fitting manner, wherein each of the two first pinions (11) interacts with one of the first rack elements (3.1.1),
and with electromotive height-adjustability, having a second motor (15) for the electrical height adjustment, and a second shaft (W2) which can be driven by the second motor (15), wherein in each case a second pinion (13) is attached to two outer ends of the second shaft (W2), i.e. arranged in a form-fitting manner, wherein each of the two second pinions (13) can be brought or are brought into interaction with racks (1.1) which are arranged on rods (1) to which the headrest can be fastened or is fastened.

## Revendications

1. Appui-tête réglable en hauteur, présentant un élément de support de base (2) et un élément de support (3) agencé dans celui-ci et apte à être guidé de manière à pouvoir coulisser longitudinalement dans une direction X, l'élément de support de base (2) comprenant un nombre d'ouvertures (2.1) pour former un guidage et l'élément de support (3) comprenant un nombre de parties de guidage (3.1), une forme du nombre d'ouvertures (2.1) correspondant à une forme du nombre de parties de guidage (3.1), l'élément de support (3) étant déplaçable longitudinalement par moteur électrique par rapport à l'élément de support de base (2) au moyen d'un premier moteur (14), un premier élément de crémaillère (3.1.1) étant disposé sur une partie de guidage (3.1), lequel est relié fonctionnellement à une première roue dentée (11), la roue dentée (11) étant disposée sur un premier arbre (W1) qui est apte à être entraîné au moyen du premier moteur (14),
**caractérisé en ce que**
un premier élément de crémaillère (3.1.1) est respectivement disposé sur deux parties de guidage (3.1) et une première roue dentée (11) est respectivement enfichée, c'est-à-dire agencée par complémentarité de formes, sur deux extrémités extérieures du premier arbre (W1), chacune des deux premières roues dentées (11) étant reliée fonctionnellement à l'un des premiers éléments de crémaillère (3.1.1),
et avec une possibilité de réglage en hauteur par moteur électrique, comportant un deuxième moteur (15) pour le réglage électrique de la hauteur, et un deuxième arbre (W2) apte à être entraîné au moyen du deuxième moteur (15),
une deuxième roue dentée (13) étant respectivement enfichée, c'est-à-dire agencée par complémentarité de forme, sur deux extrémités extérieures du deuxième arbre (W2), chacune des deux deuxièmes roues dentées (13) étant reliée fonctionnellement à des crémaillères (1.1), qui sont agencées sur des tiges (1) auxquelles l'appui-tête est apte à être fixé ou est fixé.
